# EUROPEAN PATENT SPECIFICATION

(11) **EP 2 815 600 B1**
(45) Date of publication and mention of the grant of the patent: **08.04.2020**
(21) Application number: 12868773.8
(22) Date of filing: 17.02.2012
(51) Int. Cl.: H04W 24/02, H04W 56/00, H04L 12/26, H04W 24/08, H04W 48/16

(54) **SCANNING IN WIRELESS NETWORKS**
SCANNING IN DRAHTLOSEN NETZWERKEN
BALAYAGE DANS LES RÉSEAUX SANS FIL

(43) Date of publication of application: 24.12.2014
(73) Proprietor: Nokia Technologies Oy, 02610 Espoo (FI)
(72) Inventor: KNECKT, Jarkko, FI-02330 Espoo (FI); KASSLIN, Mika, FI-02770 Espoo (FI); ONG, Eng Hwee, FI-02320 Espoo (FI)
(74) Representative: Kolster Oy Ab
(86) International application number: PCT/FI2012/050159
(87) International publication number: WO 2013/121080

(56) References cited:
- US-A1- 2008 186 917
- US-A1- 2011 149 850
- US-B2- 7 460 836
- JARKKO KNECKT (NOKIA): "Active Scanning ; 11-11-1619-03-00ai-active-scanning", IEEE SA MENTOR; 11-11-1619-03-00AI-ACTIVE-SCANNING, IEEE-SA MENTOR, PISCATAWAY, NJ USA, vol. 802.11ai, no. 3, 19 January 2012 (2012-01-19), pages 1-15, XP068038006, [retrieved on 2012-01-19]
- JAE SEUNG LEE (ETRI): "Text for Probe Response frame transmission interval ; 11-12-0062-01-00ai-text-for-probe-response -frame-transmission-interval", IEEE SA MENTOR; 11-12-0062-01-00AI-TEXT-FOR-PROBE-RESPONSE -FRAME-TRANSMISSION-INTERVAL, IEEE-SA MENTOR, PISCATAWAY, NJ USA, vol. 802.11ai, no. 1, 17 January 2012 (2012-01-17), pages 1-2, XP068038140, [retrieved on 2012-01-17]

## Description

### Field

The invention relates to the field of wireless networks and, particularly, to facilitating scanning for a wireless network.

### Background

In a wireless communication system, a terminal device scans for available wireless networks before selecting a wireless network to connect with. Depending on the system specification, the scanning may be carried out by passively scanning for any scanning messages transmitted by wireless networks or actively by transmitting a request message obliging wireless networks to respond with a response message. Expediting the scanning phase naturally expedites the connection establishment.

Jarkko Kneckt (Nokia): "Active Scanning; 11-11-1619-03-00ai-active-scanning", IEEE SA Mentor; 11-11-1619-03-00AI-ACTIVE-SCANNING, IEEE-SA Mentor, Piscataway, NJ USA, vol. 802.11ai, no.3, 19 January 2012, pages 1-15 discloses an active scanning procedure for a STA in chapter 10.1.4.3. Upon transmitting a probe request, the STA starts a probe timer. If PHY-CCA.indication(busy) primitive has not been detected within MinChannelTime, the STA moves to the next channel. Upon receiving a probe response or a beacon frame, the STA moves to the next channel when the probe timer reaches MaxChannelTime.

Jae Seung Lee (ETRI): "Text for probe response frame transmission interval; 11-12-0062-01-00ai-text-for-probe-response-frame-transmission-interval", IEEE SA Mentor; 11-12-0062-01-00ai-text-for-probe-response-frame-transmission-interval", IEEE SA Mentor, Piscataway, NJ USA, vol. 802.11ai, no. 1, 17 January 2012, pages 1-2 discloses a probing procedure in active scanning. It discloses sending a probe request comprising a timeout interval element. It further discloses characteristics of a probe response frame.

### Brief description

According to an aspect of the present invention, there is provided a method as specified in claim 1.

According to another aspect of the present invention, there is provided an apparatus as specified in claim 15.

According to yet another aspect of the present invention, there is provided a computer program product embodied on a computer readable distribution medium as specified in claim 17.

Embodiments of the invention are defined in the dependent claims.

### List of drawings

Embodiments of the present invention are described below, by way of example only, with reference to the accompanying drawings, in which
Figure 1 illustrates communication scenario to which embodiments of the invention may be applied;
Figure 2 illustrates a process for maintaining transmission rate of scanning messages according to an embodiment of the invention;
Figures 3 and 4 illustrate embodiments for monitoring the transmission rate of the scanning messages according to some embodiments of the invention;
Figure 5 illustrates an embodiment for maintaining the transmission rate of enabling messages according to an embodiment of the invention;
Figure 6 illustrates a flow diagram of a process for prioritizing scanning messages when maintaining the transmission rate of the scanning messages according to an embodiment of the invention;
Figure 7 illustrates a procedure for determining the type and contents of the scanning message according to an embodiment of the invention;
Figure 8 illustrates an embodiment for reducing signalling overhead; and
Figure 9 illustrates a block diagram of an apparatus according to an embodiment of the invention.

### Description of embodiments

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

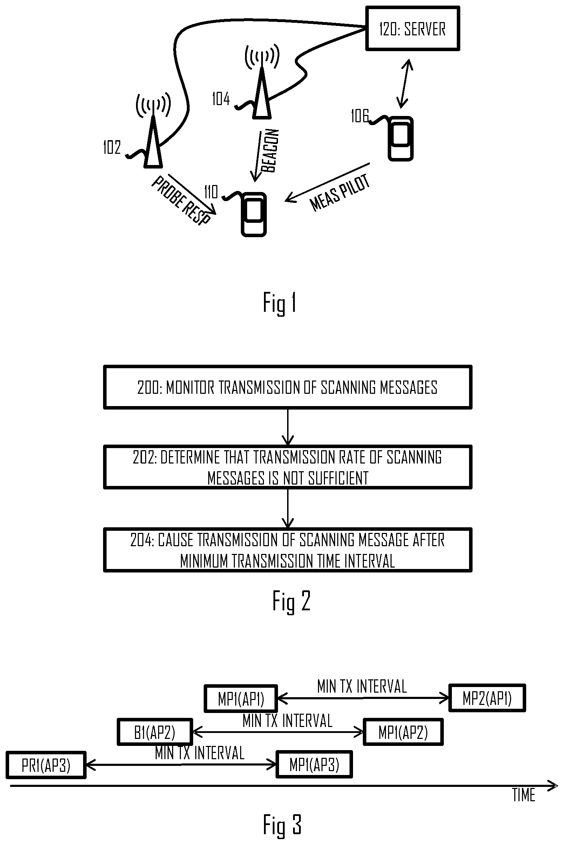

A general architecture of a wireless communication system to which embodiments of the invention may be applied is illustrated in Figure 1. Figure 1 illustrates wireless communication devices forming wireless networks that may be referred to as service sets. A basic service set (BSS) may be defined by a group of wireless communication devices comprising an access point (AP) 102, 104, 106 and one or more terminal stations (STA) 110 communicating with one of the access points 102, 104, 106 depending on with which BSS the STA associates to for frame transmission. The BSS is a basic building block of an IEEE 802.11 wireless local area network (WLAN), and it may have a determined coverage area defined by the coverage area of the AP 102, 104, 106, for example. The most common BSS type is an infrastructure BSS that includes a single AP together with all associated, non-access-point STAs. The AP may be a fixed AP as AP 102, 104, or it may be a mobile AP as AP 106. The APs 102, 104, 106 may also provide access to other networks, e.g. the Internet. In another embodiment, at least one of the BSSs, is an independent BSS (IBSS) or a mesh BSS (MBSS) without a dedicated AP, e.g. the communication device 106 may in such an embodiment be a non-access-point terminal station. Yet another embodiment of the service set is an extended service set (ESS) which may be defined as a set of one or more interconnected BSSs that appear as a single BSS to the STAs. For example, any one of the APs 102, 104, 106 may belong to an ESS comprising a plurality of APs.

While embodiments of the invention are described below in the context of the above-described topologies of IEEE 802.11, it should be appreciated that other embodiments of the invention are applicable to networks based on other specifications, e.g. WiMAX (Worldwide Interoperability for Microwave Access), UMTS LTE (Long-term Evolution for Universal Mobile Telecommunication System), and other networks having cognitive radio features, e.g. transmission medium sensing features and capability to adopt operational parameters to enable coexistence with radio access networks based on different specifications and/or standards.

The BSSs are represented by the APs and/or STAs connected to each other, thereby establishing a BSS. The STA 110 may establish a connection to any one of the APs 102, 104, 106. The connection establishment may include authentication in which an identity of a STA is established in the AP. The authentication may comprise exchanging an encryption key used in the BSS. After the authentication, the AP and the STA may carry out association in which the STA is fully registered in the BSS, e.g. by providing the STA with an association identifier (AID) for frame transmissions.

The APs 102 to 106 may establish a signalling interface for exchanging any information relevant for the coexistence of the APs 102 to 106. An AP may provide the other APs information on its communication parameters, information on other BSSs the AP has discovered and their communication parameters, etc. In some embodiments, at least some of the APs 102 to 106 are connected to a server 120 controlling at least some of the operations of the APs. The server 120 may provide centralized control of at least some of the communication parameters of the AP2. The connections between the fixed APs 102, 104 and the server may be wired, whereas the mobile AP 106 may establish a wireless connection with the server 120. The server 120 may be an ESS server controlling the operation of APs within the same ESS, for example. In another embodiment, the server 120 controls the operation of APs belonging to different service sets or different wireless networks.

An 802.11n specification specifies a data transmission mode in which a STA can have only one secondary channel which results in a maximum bandwidth of 40 MHz. The primary channel is used in all transmissions, and with associated devices supporting only the 20 MHz mode. The secondary channel may be used with clients supporting wider transmission bandwidths, wherein the primary channel communication is extended by using the secondary channel as additional bandwidth. A further definition in 802.11n is that the primary and secondary channels are adjacent. IEEE 802.11ac task group is developing an extension with a data transmission model to provide for wider bandwidths by increasing the number of secondary channels from 1 up to 7, thus resulting in bandwidths of 20 MHz, 40 MHz, 80 MHz, and 160 MHz.

The primary channel may be used for connection establishment leading to association between two wireless apparatuses between which the connection is to be established. A wireless apparatus preparing for the association may scan for channels in order to detect a signal indicating presence of another wireless apparatus for association. The wireless apparatus may be in a completely unassociated state or it may have at least one existing association while seeking for a new association. IEEE 802.11 network discovery mechanisms define two modes: passive and active scanning. In the passive scanning, the wireless apparatus scans a channel for a determined period of time. If a wireless network is discovered by detecting a scanning message transmitted by the wireless network, the wireless apparatus may proceed to connection establishment or, otherwise, it may tune to another channel. The scanning messages the wireless apparatus may scan for comprise beacon frames, measurement pilot frames, or any other frames. The measurement pilot frame may be defined as a short action frame comprising a subset of information contained in the beacon frame, but the measurement pilot frame may be transmitted more frequently than the beacon frames. The frames may be originated from any AP or destined to any AP or, alternatively, the wireless apparatus scans for frames that meet given criteria e.g. a determined identifier, such that the wireless apparatus is able to detect any wireless network, including IBSSs and mesh BSSs. When the wireless apparatus uses the active scanning, it generates a probe request frame and transmits the probe request frame in order to request APs or, in general, other wireless apparatuses to reply with probe response frames. The probe response frames may thus also be considered to be scanning messages the wireless apparatus is attempting to detect. The rules applied to the requesting device (e.g. a STA) and the responding device (e.g. an AP) during the active scanning may be defined as follows. Upon tuning to a new channel, e.g. a new frequency channel, the requesting device may first scan the channel for a determined period of time, e.g. a probe delay, or until it detects a frame header, e.g. a physical layer convergence protocol (PLCP) header, on the channel. Thereafter, the requesting device may initiate a channel contention so as to gain a transmission opportunity for transmission of a probe request frame. The requesting device may transmit one or more probe request frames comprising information (for example, a service set identifier (SSID) field and/or a BSS identifier field) specifying which wireless apparatus may respond to the probe request. The requesting device may also reset a probe timer to zero and start it upon transmitting the probe request. If the requesting device detects no WLAN signal with sufficiently high energy on the channel on which the probe request was transmitted before the probe timer reaches a minimum probe response time, it tunes to a next channel. Otherwise, the requesting device may wait on the channel until the probe timer reaches a maximum probe response time and, thereafter, the requesting device processes all received probe responses. Optionally, the requesting device may then tune to scan the next channel. The probing procedure provides the requesting device with information on the wireless networks present in the area and, as a consequence, enables the requesting device to select a wireless network with which to establish a connection. The responding device receiving the probe request may respond with a probe response if an address field in the probe request frame is a broadcast address, an individual medium access control (MAC) address of the responding device, or a multicast address of the responding device. Another condition for causing the responding device to transmit the probe response is that the SSID in the probe request is a so-called wildcard SSID, the specific SSID of the responding device, or the specific SSID of the responding device is included in an SSID list element of the probe request. Yet another condition may be that the specific Mesh ID in the probe request is the specific Mesh ID of the responding device, or an address 3 field in the probe request is a wildcard BSSID, the BSSID of the responding device, or the MAC address of the peer device in a mesh BSS. Further conditions for responding to the probe request may also be set. In general, the probe request specifies the conditions defining the devices that should respond with the probe response. All devices that fulfil the conditions may attempt to transmit the probe response frame.

The APs may thus transmit the probe responses, the beacon frames, and the measurement pilot frames as the scanning messages. Some the scanning messages may be periodic, e.g. the beacon frames, while other scanning messages may be aperiodic, e.g. the probe responses. In the case of overlapping BSSs where a plurality of BSSs operate on the same channel within the same geographic area, the number of transmitted scanning messages may cause excessive overhead and congestion on the channel. On the other hand, the APs should transmit the scanning messages with a sufficiently high rate to facilitate and expedite the scanning of the STAs.

Let us now consider an embodiment of the invention with reference to a flow diagram of Figure 2. The flow diagram illustrates a process for ensuring sufficient transmission rate of the scanning messages. The process may be carried out in an apparatus comprised in any one of the access points 102 to 106, while in other embodiments the apparatus is comprised in the server 120 controlling the APs 102 to 106 in the transmission of the scanning messages. Referring to Figure 2, the transmission of the scanning messages in a wireless network is monitored in block 200. The APs 102 to 106 may monitor the transmission of the scanning messages by sensing a radio channel. The server 120 may monitor the transmission of the scanning messages on the basis of the information received from the APs 102 to 106. The APs may report transmission of any scanning messages and/or associated communication parameters, e.g. periodicity of the periodic scanning messages.

In block 202, it is determined that a transmission rate of the scanning messages is not sufficient upon detecting no scanning message within a minimum transmission time interval. The minimum transmission time interval may be a preset time interval defining a threshold for triggering the transmission of an additional scanning message. As a consequence, upon determining that the transmission rate of scanning messages is not sufficient, e.g. upon detecting no scanning message within the minimum transmission time interval counted by a timer, an access point of the wireless network is caused to transmit a scanning message in block 204. On the other hand, upon detecting a scanning message during the minimum transmission time interval, the timer may be reset and the transmission of the scanning message may be prevented.

The embodiment of Figure 2 ensures that the APs 102 to 106 will transmit the scanning messages within a minimum interval defined by the minimum transmission time interval. This expedites the scanning procedure of the STA 110. In an embodiment, the minimum transmission time interval is equal to or less than 20 milliseconds (ms). In another embodiment, the minimum transmission time interval is equal to or less than 10 ms.

The scanning messages being monitored so as to determine their transmission rate may include periodic and/or aperiodic scanning messages. From the point of view of the apparatus carrying out the monitoring and the determination of the transmission rate, the monitored scanning messages may be detected with random intervals. In some situations, the interval between consecutive scanning messages detected by the apparatus may be regular, while in other situations the interval may be irregular, and the embodiment of Figure 2 ensures that the scanning messages will be transmitted within the minimum interval regardless of the pattern in which the scanning messages are detected by the apparatus.

In an embodiment, the access point inserts into the scanning messages an information element specifying the transmission rate of the scanning messages. The information element may be called a maximum scanning frame transmission interval. The element may be one octet in length and indicates a time interval during which a scanning message will be transmitted. The information element may define a transmission rate that is proportional to the minimum transmission time interval. It should be noted that the value of the information element may take into account any processing and/or transmission delay needed in addition to the time period defined by the minimum transmission time interval. The time interval may be indicated in units of 0.5 ms. The maximum scanning frame transmission interval information enables the scanning device to select the duration of the channel scanning.

In an embodiment, upon determining that a transmission rate of scanning messages is not sufficient, the access point is configured to transmit a measurement pilot frame. In this embodiment, the conventional periodic measurement pilot frames may be replaced by aperiodic measurement pilot frames. The transmission of the measurement pilot frames may be used as a supplement to the other scanning messages, and they may be transmitted on-a-need basis upon determining that the transmission rate of the scanning messages is not sufficient. This embodiment reduces the number of scanning messages particularly in a case of a plurality of overlapping BSSs, and yet it maintains the minimum requirements for the transmission rate of the scanning messages. In another embodiment, the access point may be configured to transmit the measurement pilot frames with a predefined periodicity and, additionally, the access point may be configured to transmit the measurement pilot frames upon determining that the transmission rate of the scanning messages is not sufficient. Accordingly, there may be multiple criteria for transmitting the measurement pilot frames. In yet another embodiment, the access point is configured to transmit the measurement pilot frames with a predefined periodicity and, additionally, the access point may be configured to transmit another scanning message upon determining that the transmission rate of the scanning messages is not sufficient. This scanning message may be a new scanning message, and it may be arranged to carry the same information or a subset of the information contained in the measurement pilot frame, but it may be logically a different message.

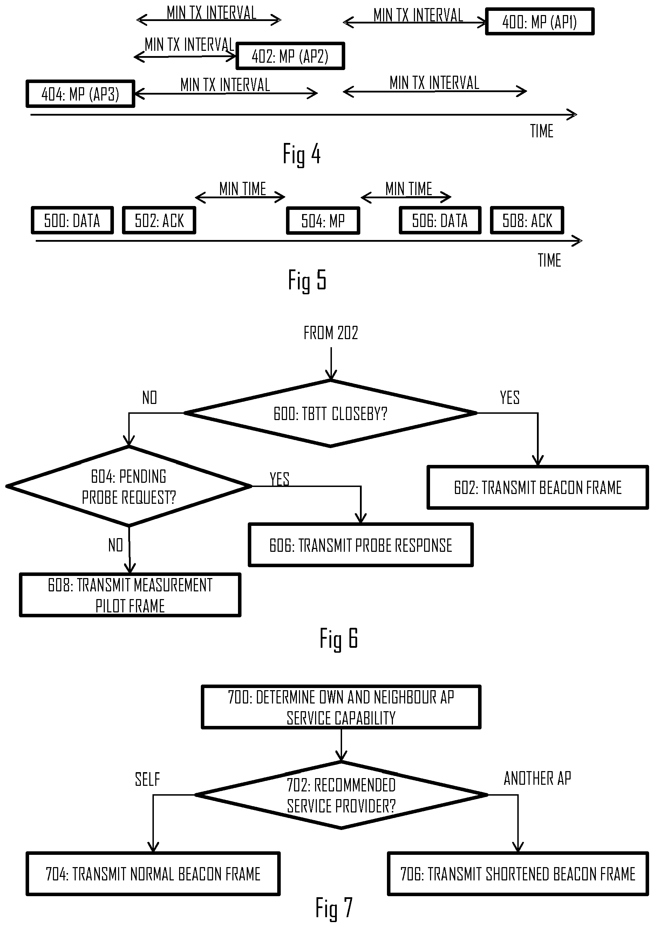

Let us now consider some embodiments for maintaining the transmission rate of the scanning messages. In an embodiment, the transmission rate of each access point is evaluated independently, while in another embodiment a plurality of overlapping BSSs are evaluated jointly. Figure 3 illustrates an example of the operation according to the former embodiment, while Figure 4 illustrates an example of the operation of the latter embodiment. Referring to Figure 3, the transmission of scanning messages by each access point (AP1, AP2, AP3) are evaluated independently. The access points AP1, AP2, AP3 may be comprised in mutually overlapping BSSs. In this embodiment, the access point may store the predefined minimum transmission time interval (min TX interval in the Figures). With the terminology of the IEEE 802.11, the minimum transmission time interval may be defined in a management information base (MIB) a variable dot11MaxDurationBetweenScanningMessage. The access point may then apply a timer to count the duration after transmission of each scanning message it transmits, e.g. the beacon frame, the measurement pilot frame, and/or the probe response, and if the timer expires, this triggers the determination of the low transmission rate of the scanning messages and the transmission of another scanning message, e.g. the beacon frame, the measurement pilot frame, or the probe response. Embodiments for selecting the scanning message to be transmitted at this instance are discussed below. As shown in Figure 3, a first access point AP1 counts the duration from the most recent scanning message (a measurement pilot frame MP1(AP1)) it has transmitted itself and, upon expiry of the min TX interval, it transmits another scanning message (a measurement pilot frame MP2(AP1)). As the first access point does not take into account the scanning messages transmitted by the other access points AP2, AP3, it does not reset the timer upon detecting the measurement pilot frames MP1(AP2) and MP1(AP3) transmitted by the other access points AP2, AP3. The second access points AP2 carries out the same functionality and, in this example, the second access point AP2 counts the duration since the transmission of a beacon frame B1 (AP2) it has transmitted. Upon expiry of the min TX interval, the second access point AP2 triggers the transmission of a measurement pilot frame MP1 (AP2). The third access point AP3 also carries out the same functionality and, in this example, the third access point AP3 counts the duration since the transmission of a probe response frame PR1 (AP2) it has transmitted. Upon expiry of the min TX interval, the third access point AP3 triggers the transmission of a measurement pilot frame MP1(AP3). The access points AP1, AP2, AP3 may apply the same minimum transmission time interval, or they may apply different minimum transmission time intervals. The minimum transmission time interval may be selected to be shorter than a period of any periodic scanning message. Other criteria for selecting the length of the minimum transmission time interval may also be used, e.g. the number of overlapping BSSs wherein the length of the minimum transmission time interval may be increased in proportion to the number of overlapping BSSs. Such selection rule may be used to reduce the number of scanning messages.

The monitoring of the transmission of the scanning messages may be carried out by carrying out the monitoring internally in each access point AP1, AP2, AP3. Internal monitoring may be defined as that the access point may monitor events carried out in the access point itself, and there is no need to sense external events. In the embodiment of Figure 4 where the access points AP1, AP2, AP3 take into account the scanning messages of the neighbouring access points as well, the monitoring may comprise sensing the external events through radio channel sensing, for example. Referring to Figure 4, each access point AP1, AP2, AP3 may sense the radio channel and attempt to detect scanning messages transmitted by the other access points. Naturally, each access point AP1, AP2, AP3 may monitor the scanning messages transmitted by itself. Let us assume that the third access point AP3 first transmits a scanning message, e.g. a measurement pilot frame 404. In connection with the transmission of the scanning message, the third access point AP3 resets its timer and starts scanning the channel for other scanning messages. Meanwhile, the first access point AP1 and the second access point AP2 scan the channel and, upon detecting the scanning message 404, they both reset their respective timers counting the minimum transmission time interval. Let us assume that the second access point AP2 applies the shortest minimum transmission time interval and, as a consequence, the timer of the second access point AP2 expires first and triggers the transmission of the scanning message 402. Upon detecting the transmission of the scanning message 402 internally in the second access point AP2, the second access point AP2 resets its timer. Upon detecting the scanning message 402 in the channel, the first and third access points AP1, AP3 both reset their timers. Thereafter, let us assume that the timer of the first access point AP1 expires next without the first access point AP1 detecting transmission of a scanning message and, as a consequence, the first access point transmits the scanning message 400. Again, the timers of all access points AP1, AP2, AP3 detecting the transmission of the scanning message may be reset.

As shown in Figure 4, the access points may employ different values for the minimum transmission time interval. In an embodiment where the minimum transmission time interval is fixed and equal to all access points, the access points AP1, AP2, AP3 may carry out a conventional channel contention in order to determine which one of them gains access to the channel so as to transmit the scanning message. In another embodiment employing the variable length of the minimum transmission time interval, an access point may determine the length of the minimum transmission time interval autonomously or under the control of the server, for example, on the basis of the current load of the access point and the degree how much the access point determines to advertise its presence. When the access point is loaded and cannot provide much additional capacity, the access point may be configured to employ a longer minimum transmission time interval than in a case where the access point has more available capacity. The discovery of the access point may also be facilitated by employing a shorter minimum transmission time interval.

The channel sensing may be focused on a frequency channel or channels on which the access point operates, but in other embodiments the channel sensing is extended to frequency channels on which the access point does not carry out frame transmissions. In such embodiments, upon determining that the transmission rate of the scanning messages is not sufficient upon detecting no scanning messages on the sensed channels within the minimum transmission time interval, the access point may be configured to transmit the scanning message on the channel on which it carries out frame transmissions, e.g. a primary channel of the access point.

The embodiment of Figure 4 further reduces the number of transmitted scanning messages while ensuring the minimum transmission rate of the scanning messages, wherein the minimum transmission rate is defined by the minimum transmission time interval.

The above-described embodiments relate to monitoring for the scanning messages to enable a terminal station to detect the presence of the wireless networks and associated operational parameters in an expedited manner. However, there are scenarios where the transmission rate may be extended to other frames. For example, in some wireless networks, a terminal station may acquire the information on presence of the wireless network from frames other than the scanning messages. For example, on 5GHz license-exempt bands, weather and military radars may operate on the same channel as the wireless networks. A terminal station that determines to use these channels needs to verify that the channel is not occupied by radar or another primary system. The verification may be carried out by discovering a signal from an enabling device, e.g. an access point of the wireless network. A frame received from the access point serves as an enabling signal indicating that the channel is free from the primary system and, upon detecting the enabling signal, the terminal station may proceed in carrying out authentication and association procedures. In order to maintain the sufficient transmission rate of frame transmissions on the channel, the access point may monitor the transmission of any frames that may serve as the enabling signal on the channel. As a consequence, the concept of the above-described embodiments is expanded to consider the scanning messages but at least one other type of message or frame. Upon detecting a frame transmission on the channel, e.g. a frame transmission of the access point itself or by another access point, the access point may start a timer counting a second minimum transmission time interval. Upon detecting no frame transmission on the channel within the time counted by the timer, the access point may trigger the transmission of the scanning message. The scanning message may thus be used as an additional ad hoc enabling message in order to maintain the transmission rate of the enabling messages.

Referring to Figure 5, let us assume that a physical layer convergence protocol data unit (PPDU) frame transmission 500 and/or a subsequent acknowledgment message 502 resets the timer and, upon expiry of the timer, the access point carries out the transmission of the scanning message 504, e.g. the measurement pilot frame, thereby maintaining the transmission rate of the enabling signals. Following PPDU frame transmission 506 and/or the associated acknowledgment frame 508 may function as further enabling signals. The access point may operate according to embodiment of Figure 3 in which it considers only frame transmissions of itself, or it may operate according to the embodiment of Figure 4 in which it considers transmissions by the neighbouring access points as well.

In general, the embodiment of Figure 5 may be generalized as a process for maintaining transmission rate of enabling signals. The process may comprise monitoring for the transmission of any message on a channel of the wireless network; setting the second minimum transmission time interval during which transmission of any message should be detected on the channel; determining that a transmission rate of the messages is not sufficient upon detecting no message within the second minimum transmission time interval; and upon determining that the transmission rate of the messages is not sufficient, causing the access point to transmit a scanning message. This procedure facilitates the measurements of the scanning device and expedites the detection that the channel is not occupied by the primary system, when the scanning device detects the enabling signal or enabling message.

In an embodiment, the second minimum transmission time interval is shorter than the above-mentioned minimum transmission time interval. In an embodiment, the second transmission time interval 5 ms or even less. In an embodiment, the second transmission time interval 3 ms or even less. With the terminology of the IEEE 802.11 networks, the second transmission time interval may be denoted as dot11MinTXPeriodicityInRadarChtimer.

As described above, there are several types of scanning messages, e.g. the measurement pilot frames, the beacon frames, and the probe response frames. Let us now consider some embodiments for selecting the type of the scanning message that is to be transmitted. In an embodiment, the selection procedure operates such that the beacon frame is prioritized over the probe response frame, and the probe response frame is prioritized over the measurement pilot frame. The prioritization may be defined such that whenever there is a possibility to transmit a higher priority scanning message within determined transmission boundaries, the higher priority scanning message is selected. Otherwise, a lower priority scanning message is selected. The boundaries of the measurement pilot frame may be such that the measurement pilot frame may be transmitted in any situation as long as the transmission does not cause an intended collision on the channel. As a consequence, the transmission of the measurement pilot frame may be limited only by channel contention rules. In an embodiment, if the transmission of the measurement pilot frame is delayed by the channel unavailability, the channel sensing may be continued during the delay and, upon detection of the scanning message during the delay, the transmission of the measurement pilot frame may be prevented and the timer may be reset. This procedure may be applied to the delay in the transmission of other scanning messages as well.

Let us consider an embodiment of the prioritization with reference to a flow diagram of Figure 6. The process of Figure 6 may be understood as an embodiment of block 204. The procedure follows the priority order in which the possibility of transmitting the beacon frame is evaluated first, then possibility of transmitting the probe response is evaluated and, as a last option, the measurement pilot frame is transmitted. Referring to Figure 6, the possibility of transmitting the beacon frame is evaluated in block 600 in which it is determined whether a next target beacon transmission time (TBTT) is within a predefined time interval after the expiry of the minimum transmission time interval. This time interval may be shorter than the minimum transmission time interval. If the TBTT will occur with the predefined time interval, the process proceeds to block 602 in which the beacon frame is transmitted as the scanning message in the next TBTT, and the timer counting the minimum transmission time interval is reset. On the other hand, if the TBTT is not sufficiently close in the future such that it is determined that the sufficient transmission rate of the scanning message cannot be achieved by using the periodic beacon frame, as defined by the time interval, the process proceeds to block 604. In block 604, the transmission possibility of the probe response is evaluated. Block 604 may comprise checking for the presence of a pending probe request that defines conditions that oblige the access point to respond. If there is a pending probe request that causes the access point to transmit the probe response, the process proceeds to block 606 in which the access point transmits the probe response frame as the scanning message, and the timer counting the minimum transmission time interval is reset. On the other hand, if there are no pending probe requests that trigger the transmission of the probe response, the process proceeds to block 608 in which the access point transmits the measurement pilot frame as the scanning message, and the timer counting the minimum transmission time interval is reset.

In an embodiment, the access point includes in the scanning messages information on other BSSs to provide the terminal devices with information on other BSSs. This may be used to recommend the other BSSs to serve that terminal devices in case the access point is low on capacity, for example. As a consequence, the access point may include in the scanning message information on those BSSs that the access point considers to offer better capacity and service than the access point itself. As mentioned above, the access point may acquire knowledge on the parameters and properties, e.g. the capacity, of the neighbouring BSSs by scanning the messages transmitted by the neighbouring BSSs or through backbone signalling. The access points scan for and acquire beacon frames and probe response frames from other access points. Based on the parameter values such as quality-of-service enhanced BSS (QBSS) load, BSS Load, Capabilities, number of associated terminal devices, the access point may select the access point providing the best service capability and include the relevant information on those access points and/or associated BSSs in the scanning message. When the access point recommends another access point(s) as the service provider(s), the access point may transmit a shortened scanning message comprising less information on the access point itself compared with a situation where the access point recommends itself as the service provider. The shortened scanning message may comprise a traffic indication map (TIM) element, and some capability information. The capability information may comprise general capability information such as the specification version supported by the access point. Any detailed capability information, e.g. supported data rates enhanced distributed channel access (EDCA) parameters, included in a default scanning message may be excluded from the shortened scanning message. Figure 7 illustrates an embodiment of a procedure for recommending the service provider in the scanning messages. The process may be carried out in an access point. Referring to Figure 7, the service capability of the access points is determined in block 700. Block 700 may comprise comparison of capability and/or capacity parameters of the access points. In block 702, the recommended service provider is selected in block 702 on the basis of this comparison. If it is determined in block 702 that the access point itself has the best service capability, the process proceeds to block 704 in which the access point transmits a normal scanning message, e.g. a normal beacon frame. On the other hand, if it is determined in block 702 that one or more other access points has the best service capability, e.g. another access point in the ESS of the access point itself, in the same roaming consortium, or with the same network identifier, the process proceeds to block 706 in which the access point transmits a shortened scanning message, e.g. a shortened beacon frame, and includes in the shortened scanning message information on the recommended access points and less information on the access point itself.

In an embodiment, the access point triggers the operation of the process of Figure 7 if it detects the presence of no legacy terminal devices that do not support the shortened scanning messages. In case the access point detects the presence of such legacy devices, it may disable the functionality of Figure 7.

In another embodiment, recommending the other access point(s) as the service provider(s) is carried out by requesting the terminal device to tune to selected channels to carry out the scanning. The access point may acquire the operating channels of the neighbouring access points from the neighbouring access points directly or from terminal devices that have carried out the scanning and reported results to the access point. The access point may then include the information on the operating channels of the recommended access points to its scanning messages. As a consequence, the terminal device may tune to an appropriate channel and expedite its network discovery and association.

As already mentioned above, the above-described embodiments may be carried out in the access points 102, 104, 106, or the functionality may be embedded in the server 120 that controls the transmission of the scanning messages of the access points 102, 104, 106. The server 120 may be a dedicated server or its functionality may be included in any one of the access points 102, 104, 106. The functionality of the server 120 is to combine the channel sensing results acquired from the access points 102, 104, 106 and thus acquired understanding of the channel to make joint steering commands related to the transmission of the scanning messages, for example. An access point may report to the server information on the detected scanning messages. The server 120 may then apply the timer to determine when the transmission rate of the scanning messages is not sufficient and coordinate the transmission of the scanning messages according to the above-described principles. The server 120 may also control the content of the scanning messages, e.g. whether to transmit a normal or shortened scanning message, as described above.

With respect to learning of the properties of the area and the presence of the wireless networks, the server 120 may keep record on transmitted probe response, beacon, and measurement pilot frames per access point. The locations of the access points may also be stored in a memory of the server 120, or the server 120 may learn the locations of the access points from the neighbour reports received from the access points. With respect to recommending an access point as the service provider and the contents of the scanning messages, the server 120 may configure the access point transmitting the scanning message to include in the scanning message the parameters of only those access points that have sufficient capacity to serve terminal devices. A Neighbour List information element may be added to all these frames to recommend the access point(s).

When a terminal device receives a scanning message addressed to an individual address of another terminal device or to a broadcast address, the terminal device may deduce that any one of the recommended access points may be used, and it may select between the recommended access points on the basis of a radio link performance, for example, such that the access point providing the best radio channel quality is selected.

With respect to selecting the transmitters of the scanning messages, the server 120 may organize the transmitters so that the coverage is optimized, e.g. such that the scanning messages cover the whole coverage area of the ESS, for example. The server 120 may, for example, rotate the transmitter of the scanning messages to ensure that the whole coverage of the ESS gets the discovery information. With respect to the minimum transmission time interval, the server 120 may coordinate the transmission rate of the scanning messages. For example, in areas comprising many scanning devices the server 120 may apply a shorter minimum transmission time interval such that the terminal devices may receive the scanning messages more frequently to speed up the passive scanning. On the other hand, in areas with less scanning devices a longer minimum transmission time interval may be applied. In another embodiment, the server 120 may apply a shorter minimum transmission time interval on idle or lightly loaded channels to increase the probability of association on those channels. The ESS Server may reduce the number of scanning messages on the congested channels and/or in congested networks. Thus, it is possible to avoid introducing more congestion to the network. With respect to the operation on channels where there may be the primary system and where interference towards the primary system should be avoided, the server may command the access points to frequently transmit a scanning frame as the enabling signal on such channels. Thus, the terminal devices may rapidly detect whether the channel is occupied by the primary system or available to the wireless network. The same effect may naturally be gained by distributing this functionality to one or more access points.

Some exceptions may be applied to the channels that are secondary channels of another BSS. On these channels, the periodical transmissions of the scanning messages may be avoided in order to offer better spectrum for the other BSS. If the server or the access point detects that its operating channel is used as a secondary channel of the other BSS, it may avoid transmitting the scanning messages on that channel.

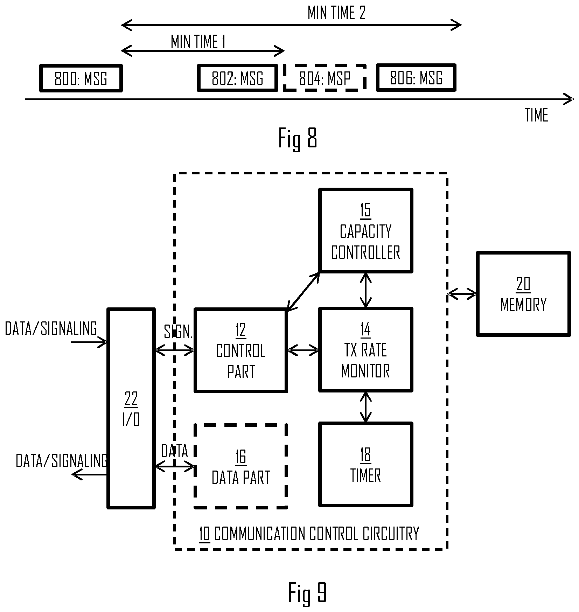

Figure 8 illustrates another embodiment for monitoring the transmission rate of the scanning/enabling messages. Embodiments described above relate to transmitting additional scanning messages in order to ensure sufficiently high transmission rate of the scanning or enabling messages. The embodiment of Figure 8 relates to an approach where the transmission of an already scheduled scanning message is cancelled when it is determined that the determined minimum transmission rate of the scanning or enabling messages may be maintained also without the scheduled scanning message. In an embodiment, it is determined that the transmission rate of scanning or enabling messages is sufficient at a target transmission time of a next periodic scanning message upon detecting transmission of a scanning message within a determined time interval. Upon determining that the transmission rate of messages is sufficient, the transmission of the next periodic scanning message is cancelled. The periodic scanning message may be a measurement pilot frame, for example. The determined time interval may any one of the above-mentioned time intervals, or it may be a different time interval. In an embodiment, the determined time interval is computed from the target transmission time of the periodic or scheduled scanning message. In an embodiment, the transmission of the measurement pilot is cancelled, if the transmission of another message is detected within a determined time interval before the target transmission time of the scanning message. It may be defined by a time parameter, e.g. dot11ScanningMessageJustTransmittedInterval. In another embodiment, the transmission of the measurement pilot is cancelled, if the transmission of another message is detected to occur within a determined time interval after the target transmission time of the scanning message. It may be defined by a time parameter, e.g. a dot11ScanningMessageWillBeTransmittedInterval. In the latter embodiment, the detection may be based on examining target transmission times of other periodic or scheduled scanning messages. Referring to Figure 8, let us assume that a scheduled message 800 is transmitted first. This scheduled message 800 may be a periodic scanning message, and it may trigger the reset of the minimum transmission time interval. If a subsequent message 802 is detected within the minimum transmission time interval and within the determined time interval from the scheduled transmission of the next scanning message 804 (defined by "MIN TIME 1" in Figure 8), the transmission of the scanning message 804 may be cancelled. Otherwise, the scanning message 804 may be transmitted as planned. On the other hand, if the subsequent message 802 is not detected but it is detected that there is another scanning message 806 scheduled for transmission within a determined time interval after the target transmission time ("MIN TIME 2" in Figure 8) of the scanning message 804. In an embodiment, the time intervals before and after the scanning message 804 may be counted from the detection of the previous scanning message 800, while in another embodiment, the target transmission time of the scanning message may be used as the reference point.

Figure 9 illustrates an embodiment of an apparatus comprising means for carrying out the above-mentioned functionalities for maintaining the transmission rate of the scanning or enabling messages. The apparatus may be an apparatus of an IEEE 802.11 network or another wireless network, e.g. an access point 102, 104, 106 or the server 120. The apparatus may be a personal computer (PC), a server computer, a laptop, a tablet computer, a cellular phone, a palm computer, a fixed base station, or any other device provided with radio communication capability or controlling the operation of the device provided with the radio communication capability. In another embodiment, the apparatus is comprised in such a device, e.g. the apparatus may comprise a physical circuitry, e.g. a chip, a processor, a micro controller, or a combination of such circuitries.

The apparatus may comprise a communication controller circuitry 10 configured to control the communications in the device. The communication controller circuitry 10 may comprise a control part 12 handling control signalling communication with respect to transmission, reception, and extraction of control or management messages including the scanning messages and/or management messages exchanged between the access point and the server 120, as described above. The control part may handle the transmission of the scanning messages during the normal operation without considering the combined transmission rate of a plurality of scanning messages of different types. Accordingly, the control part 12 may handle periodic transmission of beacon messages and any other periodic scanning messages whenever a periodic target transmission time occurs and, additionally, the transmission of aperiodic scanning messages such as the probe responses upon detecting a pending probe request. The communication controller circuitry 10 may further comprise a data part 16 that handles transmission and reception of payload data during transmission opportunities of the device (transmission) or transmission opportunities of other devices (reception). If the apparatus is the dedicated server 120 not included in the same casing with an access point, the data part 16 may be omitted unless payload data is routed through the server 120.

The communication controller circuitry 10 may further comprise a transmission rate monitor circuitry 14 configured to monitor the transmission rate of the scanning messages and/or enabling messages (depending on the embodiment) in the wireless network. In particular, the transmission rate monitor circuitry 14 may monitor the joint transmission rate of different types of scanning messages. Depending on the embodiment, the transmission rate monitor circuitry 14 may be configured to monitor the transmission rate of the scanning/enabling messages transmitted by a single access point, or it may monitor the transmission rate of the scanning/enabling messages transmitted jointly by a plurality of access points. In the former embodiment, the control part 12 may notify the transmission rate monitor circuitry 14 whenever it transmits the scanning message, and the transmission rate monitor circuitry may then reset a timer 18 counting the minimum transmission time interval and/or the second minimum transmission time interval. In the latter embodiment, the control part 12 may also be configured to scan at least one frequency channel in order to detect scanning messages transmitted by other access points, and it may inform the transmission rate monitor circuitry whenever it transmits and/or detects a transmission of a scanning message. As a consequence, the transmission rate monitor circuitry may then reset the timer 18. Upon receiving a notification of the expiry of the timer 18, the transmission rate monitor circuitry 14 may trigger the transmission of a scanning message in order to maintain the transmission rate of the scanning messages. As a consequence, the transmission rate monitor circuitry 14 may determine the type of the scanning message by making a selection between a set of scanning messages, wherein the set may comprise at least some of the beacon frame, probe response frame, and the measurement pilot frame. Upon making the selection of the type of the scanning message, the transmission rate monitor circuitry 14 may instruct the control part 12 to transmit the appropriate scanning message.

The apparatus may further comprise a capacity controller circuitry 15 configured to determine the contents of the scanning messages. In connection with transmitting the scanning messages, e.g. conventional scanning messages such as a periodic beacon frame or a probe response responding to a pending probe request and the additional scanning messages triggered by the transmission rate monitor circuitry 14, the capacity controller circuitry may be configured to carry out the procedure of Figure 7. As a result, the capacity controller circuitry 15 may configure the control part 12 to transmit an appropriate type of scanning message, e.g. a normal or a shortened scanning message, and to insert into the scanning message appropriate information recommending one or more access points to provide a terminal device or terminal devices with the wireless access services.

The circuitries 12 to 18 of the communication controller circuitry 10 may be carried out by the one or more physical circuitries or processors. In practice, the different circuitries may be realized by different computer program modules. Depending on the specifications and the design of the apparatus, the apparatus may comprise some of the circuitries 12 to 18 or all of them.

The apparatus may further comprise a memory 20 storing computer programs (software) configuring the apparatus to perform the above-described functionalities for maintaining the transmission rate of the scanning messages. The memory 20 may also store communication parameters and other information needed for the wireless communications, e.g. the different time intervals the timer is configured to count, the rules for selecting the type of the transmitted additional scanning messages, and any relevant operational parameters of the access point(s). The apparatus may further comprise input/output (I/O) components 22 providing the apparatus with communication capabilities. In an embodiment, the I/O components 22 comprise radio interface components 22 providing the apparatus with radio communication capability with terminal devices, access points, and/or the server. The radio interface components may comprise standard well-known components such as amplifier, filter, frequency-converter, (de)modulator, and encoder/decoder circuitries and one or more antennas. In another embodiment, the I/O components 22 provide the apparatus with wired communication capability to communicate with access points and the server.

In an embodiment, the apparatus carrying out embodiments of the invention in the apparatus comprises at least one processor and at least one memory including a computer program code, wherein the at least one memory and the computer program code are configured, with the at least one processor, to cause the apparatus to carry out the above-described functionality for maintaining the transmission rate of the scanning/enabling messages, as described above in connection with Figures 2 to 7. Accordingly, the at least one processor, the memory, and the computer program code form processing means for carrying out embodiments of the present invention in the apparatus monitoring and maintaining the transmission rate of the scanning/enabling messages.

As used in this application, the term 'circuitry' refers to all of the following: (a) hardware-only circuit implementations such as implementations in only analog and/or digital circuitry; (b) combinations of circuits and software and/or firmware, such as (as applicable): (i) a combination of processor(s) or processor cores; or (ii) portions of processor(s)/software including digital signal processor(s), software, and at least one memory that work together to cause an apparatus to perform specific functions; and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term "circuitry" would also cover an implementation of merely a processor (or multiple processors) or portion of a processor, e.g. one core of a multi-core processor, and its (or their) accompanying software and/or firmware. The term "circuitry" would also cover, for example and if applicable to the particular element, a baseband integrated circuit, an application-specific integrated circuit (ASIC), and/or a field-programmable grid array (FPGA) circuit for the apparatus according to an embodiment of the invention.

The processes or methods described in Figures 2 to 7 may also be carried out in the form of a computer process defined by a computer program. The computer program may be in source code form, object code form, or in some intermediate form, and it may be stored in some sort of carrier, which may be any entity or device capable of carrying the program. Such carriers include transitory and/or non-transitory computer media, e.g. a record medium, computer memory, read-only memory, electrical carrier signal, telecommunications signal, and software distribution package. Depending on the processing power needed, the computer program may be executed in a single electronic digital processing unit or it may be distributed amongst a number of processing units.

The present invention is applicable to wireless communication systems defined above but also to other suitable communication systems. The protocols used, the specifications of wireless networks, their network elements and terminal devices, develop rapidly. Such development may require extra changes to the described embodiments. Therefore, all words and expressions should be interpreted broadly and they are intended to illustrate, not to restrict, the embodiment. It will be obvious to a person skilled in the art that, as technology advances, the inventive concept can be implemented in various ways. The invention and its embodiments are not limited to the examples described above but may vary within the scope of the claims.

## Claims

1. A method carried out in an apparatus, the method comprising:
monitoring (200) transmission of messages in a wireless network;
determining (202) that a transmission rate of messages is not sufficient if the following conditions are true: detecting no message within a minimum transmission time interval and determining that a next target beacon transmission time is not within a predefined time interval after the expiry of the minimum transmission time interval; and
upon determining that the transmission rate of messages is not sufficient, causing (204) an access point of the wireless network to transmit a scanning message, wherein the apparatus is either for the access point or for a server (120) controlling the access point.

2. The method of claim 1, wherein the monitoring is focused on monitoring transmission of scanning messages, wherein the transmission rate of messages is a transmission rate of scanning messages, and wherein it is determined that the transmission rate of scanning messages is not sufficient if the following conditions are true: detecting no scanning message within the minimum transmission time interval and determining that the next target beacon transmission time is not within the predefined time interval after the expiry of the minimum transmission time interval.

3. The method of claim 1, further comprising: upon detecting a message during the minimum transmission time interval, resetting a timer counting the minimum transmission time interval.

4. The method of any preceding claim 1 to 3, wherein the monitoring comprises monitoring for periodic scanning messages and aperiodic scanning messages, wherein the periodic scanning messages comprise at least one of a beacon frame and a measurement pilot frame, and wherein the aperiodic scanning messages comprise at least one of a probe response frame and a measurement pilot frame.

5. The method of any preceding claim 1 to 4, wherein the minimum transmission time interval is shorter than a period of any periodic scanning message transmitted by the access point.

6. The method of any preceding claim 1 to 5, wherein the transmission rate of messages is a transmission rate of scanning messages, and wherein upon determining that the transmission rate of the scanning messages is not sufficient, the access point is caused to transmit a measurement pilot frame (402) as said scanning message.

7. The method of any preceding claim 1 to 6, wherein when the method is carried out in the access point, the method further comprising:
monitoring, internally in the access point, transmission of scanning messages transmitted from the access point;
determining, internally in the access point, that the transmission rate of the scanning messages transmitted by the access point is not sufficient upon detecting transmission of no scanning messages within the minimum transmission time interval; and
upon determining that the transmission rate of scanning messages is not sufficient, causing the access point to transmit the scanning message.

8. The method of any preceding claim 1 to 6, wherein when the method is carried out in the access point, the method further comprising:
monitoring, in the access point, transmission of periodic and aperiodic scanning messages from the access point and from at least one other access point;
determining, in the access point, that the transmission rate of the scanning messages transmitted by the access point and the at least one other access point is not sufficient upon detecting transmission of no scanning messages from either the access point or the at least one other access point within the minimum transmission time interval; and
upon determining that the transmission rate of scanning messages is not sufficient, causing the access point to transmit the scanning message.

9. The method of claim 1, wherein the transmission of the scanning message further comprises: determining (600) whether or not a target beacon transmission time of a periodic beacon frame is within a predefined time interval after the expiry of the minimum transmission time interval and, if so, causing (602) transmission of the beacon frame as the scanning message.

10. The method of claim 9, wherein if the target beacon transmission time of a periodic beacon frame is not within a predefined time interval after the expiry of the minimum transmission time interval, determining (604) whether or not there is a pending probe request requesting for transmission of a probe response frame and, if so, causing (600) transmission of the probe response frame as the scanning message.

11. The method of any preceding claim, further comprising:
detecting presence of a neighbouring access point and communication parameters of the neighbouring access point;
determining (700, 702) that the neighbouring access point has better service capability than said access point; and
recommending (708) service provision by the neighbouring access point by causing transmission of a shortened scanning message comprising less information on said access point than a scanning message transmitted when the service provision by said access point is recommended.

12. The method of any preceding claim, further comprising:
determining that a transmission rate of messages is sufficient at a target transmission time of a next periodic scanning message upon detecting a message within the minimum transmission time interval; and
upon determining that the transmission rate of messages is sufficient, cancelling transmission of the next periodic scanning message.

13. The method of any preceding claim, wherein the scanning message is one of the following messages: a probe response, a beacon frame, a measurement pilot frame.

14. The method of any preceding claim, wherein said monitoring comprises monitoring transmission of scanning messages in the wireless network, and wherein said detecting no message within the minimum transmission time interval comprises detecting no scanning message within the minimum transmission time interval.

15. An apparatus comprising:
means for monitoring transmission of messages in a wireless network;
means for determining that a transmission rate of messages is not sufficient if the following conditions are true: detecting no message within a minimum transmission time interval and determining that a next target beacon transmission time is not within a predefined time interval after the expiry of the minimum transmission time interval; and
means for, upon determining that the transmission rate of messages is not sufficient, causing an access point of the wireless network to transmit a scanning message, wherein the apparatus is either for the access point or for a server (120) controlling the access point.

16. The apparatus of claim 15, further comprising means for configuring the apparatus to carry out a method according to any preceding claim 2 to 14.

17. A computer program product embodied on a distribution medium readable by a computer and comprising program instructions which, when loaded into an apparatus for an access point or an apparatus for a server controlling the access point, configure the apparatus to execute a method according to any preceding claim 1 to 14.

## Patentansprüche

1. Verfahren, das in einer Vorrichtung durchgeführt wird, wobei das Verfahren Folgendes umfasst:
Überwachen (200) der Übertragung von Nachrichten in einem drahtlosen Netzwerk;
Bestimmen (202), dass eine Übertragungsrate von Nachrichten nicht ausreichend ist, wenn die folgenden Bedingungen wahr sind: Detektieren keiner Nachricht innerhalb eines minimalen Übertragungszeitintervalls und Bestimmen, dass eine nächste Bakenübertragungssollzeit nach Ablauf des minimalen Übertragungszeitintervalls nicht innerhalb eines vordefinierten Zeitintervalls liegt; und
nach Bestimmen, dass die Übertragungsrate von Nachrichten nicht ausreichend ist, Veranlassen (204), dass ein Zugangspunkt des drahtlosen Netzwerks eine Scanningnachricht überträgt, wobei die Vorrichtung entweder für den Zugangspunkt oder für einen Server (120), der den Zugangspunkt steuert, ist.

2. Verfahren nach Anspruch 1, wobei das Überwachen auf das Überwachen der Übertragung von Scanningnachrichten fokussiert ist, wobei die Übertragungsrate der Nachrichten eine Übertragungsrate von Scanningnachrichten ist und wobei bestimmt wird, dass die Übertragungsrate von Scanningnachrichten nicht ausreichend ist, wenn die folgenden Bedingungen wahr sind: Detektieren keiner Scanningnachricht innerhalb des minimalen Übertragungszeitintervalls und Bestimmen, dass eine nächste Bakenübertragungssollzeit nach Ablauf des minimalen Übertragungszeitintervalls nicht innerhalb des vordefinierten Zeitintervalls liegt.

3. Verfahren nach Anspruch 1, das ferner Folgendes umfasst: nach Detektieren einer Nachricht während des minimalen Übertragungszeitintervalls Rücksetzen eines Timers, der das minimale Übertragungszeitintervall zählt.

4. Verfahren nach einem der vorhergehenden Ansprüche 1 bis 3, wobei das Überwachen das Überwachen auf periodische Scanningnachrichten und aperiodische Scanningnachrichten umfasst, wobei die periodischen Scanningnachrichten mindestens eines von einem Bakenrahmen und einem Messpilotrahmen umfassen und wobei die aperiodischen Scanningnachrichten mindestens eines von einem Sondierungsantwortrahmen und einem Messpilotrahmen umfassen.

5. Verfahren nach einem der vorhergehenden Ansprüche 1 bis 4, wobei das minimale Übertragungszeitintervall kürzer ist als eine Periode einer periodischen Scanningnachricht, die vom Zugangspunkt übertragen wird.

6. Verfahren nach einem der vorhergehenden Ansprüche 1 bis 5, wobei die Übertragungsrate von Nachrichten eine Übertragungsrate von Scanningnachrichten ist und wobei nach Bestimmen, dass die Übertragungsrate der Scanningnachrichten nicht ausreichend ist, der Zugangspunkt veranlasst wird, einen Messpilotrahmen (402) als die Scanningnachricht zu übertragen.

7. Verfahren nach einem der vorhergehenden Ansprüche 1 bis 6, wobei, wenn das Verfahren im Zugangspunkt durchgeführt wird, das Verfahren ferner Folgendes umfasst:
Überwachen der Übertragung von Scanningnachrichten, die vom Zugangspunkt übertragen werden, intern im Zugangspunkt;
Bestimmen, dass die Übertragungsrate der Scanningnachrichten, die vom Zugangspunkt übertragen werden, nicht ausreichend ist, intern im Zugangspunkt, nachdem detektiert wurde, dass innerhalb des minimalen Übertragungszeitintervalls keine Scanningnachrichten übertragen wurden; und
nach Bestimmen, dass die Übertragungsrate von Scanningnachrichten nicht ausreichend ist, Veranlassen, dass der Zugangspunkt die Scanningnachricht überträgt.

8. Verfahren nach einem der vorhergehenden Ansprüche 1 bis 6, wobei, wenn das Verfahren im Zugangspunkt durchgeführt wird, das Verfahren ferner Folgendes umfasst:
Überwachen der Übertragung von periodischen und aperiodischen Scanningnachrichten vom Zugangspunkt und von mindestens einem anderen Zugangspunkt im Zugangspunkt;
Bestimmen, dass die Übertragungsrate der Scanningnachrichten, die vom Zugangspunkt und von dem mindestens einen anderen Zugangspunkt übertragen werden, nicht ausreichend ist, im Zugangspunkt, nachdem detektiert wurde, dass innerhalb des minimalen Übertragungszeitintervalls entweder vom Zugangspunkt oder von dem mindestens einen anderen Zugangspunkt keine Scanningnachrichten übertragen wurden; und
nach Bestimmen, dass die Übertragungsrate von Scanningnachrichten nicht ausreichend ist, Veranlassen, dass der Zugangspunkt die Scanningnachricht überträgt.

9. Verfahren nach Anspruch 1, wobei die Übertragung der Scanningnachricht ferner Folgendes umfasst: Bestimmen (600), ob nach dem Ablauf des minimalen Übertragungszeitintervalls eine Bakenübertragungssollzeit eines periodischen Bakenrahmens innerhalb eines vordefinierten Zeitintervalls liegt oder nicht, und, wenn ja, Veranlassen (602) der Übertragung des Bakenrahmens als die Scanningnachricht.

10. Verfahren nach Anspruch 9, wobei, wenn die Bakenübertragungssollzeit eines periodischen Bakenrahmens nach dem Ablauf des minimalen Übertragungszeitintervalls nicht innerhalb eines vordefinierten Zeitintervalls liegt, Bestimmen (604), ob eine ausstehende Sondierungsanforderung, die die Übertragung eines Sondierungsantwortrahmens anfordert, vorliegt oder nicht, und, wenn ja, Veranlassen (600) der Übertragung des Sondierungsantwortrahmens als die Scanningnachricht.

11. Verfahren nach einem der vorhergehenden Ansprüche, das ferner Folgendes umfasst:
Detektieren des Vorhandenseins eines benachbarten Zugangspunkts und von Kommunikationsparametern des benachbarten Zugangspunkts;
Bestimmen (700, 702), dass der benachbarte Zugangspunkt eine bessere Dienstfähigkeit aufweist als der Zugangspunkt; und
Empfehlen (708) einer Dienstbereitstellung durch den benachbarten Zugangspunkt durch Veranlassen der Übertragung einer gekürzten Scanningnachricht, die weniger Informationen über den Zugangspunkt umfasst als eine Scanningnachricht, die übertragen wird, wenn die Dienstbereitstellung durch den Zugangspunkt empfohlen wird.

12. Verfahren nach einem der vorhergehenden Ansprüche, das ferner Folgendes umfasst:
Bestimmen, dass eine Übertragungsrate von Nachrichten zu einer Übertragungssollzeit einer nächsten periodischen Scanningnachricht ausreichend ist, nachdem im minimalen Übertragungszeitintervall eine Nachricht detektiert wurde; und
nach Bestimmen, dass die Übertragungsrate von Nachrichten ausreichend ist, Abbrechen der Übertragung der nächsten periodischen Scanningnachricht.

13. Verfahren nach einem der vorhergehenden Ansprüche, wobei die Scanningnachricht eine der folgenden Nachrichten ist: eine Sondierungsantwort, ein Bakenrahmen, ein Messpilotrahmen.

14. Verfahren nach einem der vorhergehenden Ansprüche, wobei das Überwachen das Überwachen der Übertragung von Scanningnachrichten im drahtlosen Netzwerk umfasst und wobei das Detektieren keiner Nachricht innerhalb des minimalen Übertragungszeitintervalls das Detektieren von keinen Scanningnachrichten innerhalb des minimalen Übertragungszeitintervalls umfasst.

15. Vorrichtung, die Folgendes umfasst:
ein Mittel zum Überwachen einer Übertragung von Nachrichten in einem drahtlosen Netzwerk;
ein Mittel zum Bestimmen, dass eine Übertragungsrate von Nachrichten nicht ausreichend ist, wenn die folgenden Bedingungen wahr sind: Detektieren keiner Nachricht innerhalb eines minimalen Übertragungszeitintervalls und Bestimmen, dass eine nächste Bakenübertragungssollzeit nach Ablauf des minimalen Übertragungszeitintervalls nicht innerhalb eines vordefinierten Zeitintervalls liegt; und
ein Mittel zum Veranlassen, dass ein Zugangspunkt des drahtlosen Netzwerks eine Scanningnachricht überträgt, nachdem bestimmt wurde, dass die Übertragungsrate von Nachrichten nicht ausreichend ist, wobei die Vorrichtung entweder für den Zugangspunkt oder für einen Server (120), der den Zugangspunkt steuert, ist.

16. Vorrichtung nach Anspruch 15, die ferner ein Mittel zum Auslegen der Vorrichtung zum Durchführen eines Verfahrens gemäß einem der vorhergehenden Ansprüche 2 bis 14 umfasst.

17. Computerprogrammprodukt, das auf einem Verteilungsmedium enthalten ist, das von einem Computer lesbar ist und Programmanweisungen umfasst, die, wenn sie in eine Vorrichtung für einen Zugangspunkt oder eine Vorrichtung für einen Server, der den Zugangspunkt steuert, geladen werden, die Vorrichtung zum Ausführen eines Verfahrens gemäß einem der vorhergehenden Ansprüche 1 bis 14 auslegen.

## Revendications

1. Procédé mis en œuvre dans un appareil, le procédé comprenant :
la surveillance (200) de la transmission de messages dans un réseau sans fil ;
la détermination (202) du fait qu'un débit de transmission de messages n'est pas suffisant si les conditions suivantes sont remplies : la détection de l'absence de message au cours d'un intervalle de temps de transmission minimal et la détermination du fait qu'un moment de transmission de balise cible suivant ne se situe pas dans un intervalle de temps prédéfini après l'expiration de l'intervalle de temps de transmission minimal ; et
lorsqu'il est déterminé que le débit de transmission de messages n'est pas suffisant, la fait de provoquer (204) la transmission d'un message d'analyse par un point d'accès du réseau sans fil, dans lequel l'appareil est destiné soit au point d'accès, soit à un serveur (120) commandant le point d'accès.

2. Procédé selon la revendication 1, dans lequel la surveillance est centrée sur la surveillance de la transmission de messages de balayage, dans lequel le débit de transmission de messages est un débit de transmission de messages de balayage, et dans lequel il est déterminé que le débit de transmission des messages de balayage n'est pas suffisant si les conditions suivantes sont remplies : la détection de l'absence de message de balayage au cours de l'intervalle de temps de transmission minimal et la détermination du fait que le moment de transmission de balise cible suivant ne se situe pas dans l'intervalle de temps prédéfini après l'expiration de l'intervalle de temps de transmission minimal.

3. Procédé selon la revendication 1, comprenant en outre : lors de la détection d'un message au cours de l'intervalle de temps de transmission minimal, la réinitialisation d'une temporisation qui compte l'intervalle de temps de transmission minimal.

4. Procédé selon l'une quelconque des revendications 1 à 3 précédentes, dans lequel la surveillance comprend la surveillance de messages de balayage périodiques et de messages de balayage apériodiques, dans lequel les messages de balayage périodiques comprennent au moins l'une d'une trame balise et d'une trame pilote de mesure, et dans lequel les messages de balayage apériodiques comprennent au moins l'une d'une trame de réponse de sondage et d'une trame pilote de mesure.

5. Procédé selon l'une quelconque des revendications 1 à 4 précédentes, dans lequel l'intervalle de temps de transmission minimal est plus court qu'une période d'un message de balayage périodique quelconque transmis par le point d'accès.

6. Procédé selon l'une quelconque des revendications 1 à 5 précédentes, dans lequel le débit de transmission de messages est un débit de transmission de messages de balayage, et dans lequel, lorsqu'il est déterminé que le débit de transmission des messages de balayage n'est pas suffisant, le point d'accès est amené à transmettre une trame pilote de mesure (402) en tant que ledit message de balayage.

7. Procédé selon l'une quelconque des revendications 1 à 6 précédentes, dans lequel, lorsque le procédé est mis en œuvre sur le point d'accès, le procédé comprend en outre :
la surveillance, de manière interne dans le point d'accès, de la transmission de messages de balayage transmis depuis le point d'accès ;
la détermination, de manière interne dans le point d'accès, du fait que le débit de transmission des messages de balayage transmis par le point d'accès n'est pas suffisant lorsqu'il est détecté qu'aucun message de balayage n'est transmis au cours de l'intervalle de temps de transmission minimal ; et
lorsqu'il est déterminé que le débit de transmission de messages de balayage n'est pas suffisant, le fait d'amener le point d'accès à transmettre le message de balayage.

8. Procédé selon l'une quelconque des revendications 1 à 6 précédentes, dans lequel, lorsque le procédé est mis en œuvre dans le point d'accès, le procédé comprend en outre :
la surveillance, dans le point d'accès, de la transmission de messages de balayage périodiques et apériodiques depuis le point d'accès et depuis au moins un autre point d'accès ;
la détermination, dans le point d'accès, du fait que le débit de transmission des messages de balayage transmis par le point d'accès et par ledit au moins un autre point d'accès n'est pas suffisant lorsqu'il est détecté qu'aucun message de balayage n'est transmis depuis soit le point d'accès soit ledit au moins un autre point d'accès au cours de l'intervalle de temps de transmission minimal ; et
lorsqu'il est déterminé que le débit de transmission de messages de balayage n'est pas suffisant, le fait d'amener le point d'accès à transmettre le message de balayage.

9. Procédé selon la revendication 1, dans lequel la transmission du message de balayage comprend en outre : la détermination (600) du fait de savoir si un temps de transmission de balise cible d'une trame balise périodique se situe dans un intervalle de temps prédéfini après l'expiration de l'intervalle de temps de transmission minimal et, si cela est le cas, le fait de provoquer (602) la transmission de la trame balise en tant que message de balayage.

10. Procédé selon la revendication 9, dans lequel, si le temps de transmission de balise cible d'une trame balise périodique ne se situe pas dans un intervalle de temps prédéfini après l'expiration de l'intervalle de temps de transmission minimal, la détermination (604) de l'existence ou non d'une demande de sondage en attente demandant la transmission d'une trame de réponse de sondage et, si cela est le cas, le fait de provoquer (600) la transmission de la trame de réponse de sondage en tant que message de balayage.

11. Procédé selon l'une quelconque des revendications précédentes, comprenant en outre :
la détection de la présence d'un point d'accès voisin et de paramètres de communication du point d'accès voisin ;
la détermination (700, 702) du fait que le point d'accès voisin présente une meilleure capacité de service que ledit point d'accès ; et
la recommandation (708) de la fourniture de service par le point d'accès voisin en provoquant la transmission d'un message de balayage raccourci comprenant moins d'informations concernant ledit point d'accès qu'un message de balayage transmis lorsque la fourniture de service par ledit point d'accès est recommandée.

12. Procédé selon l'une quelconque des revendications précédentes, comprenant en outre :
la détermination du fait qu'un débit de transmission de messages est suffisant à un moment de transmission cible d'un message de balayage périodique suivant lors de la détection d'un message au cours de l'intervalle de temps de transmission minimal ; et
lorsqu'il est déterminé que le débit de transmission de messages est suffisant, l'annulation de la transmission du message de balayage périodique suivant.

13. Procédé selon l'une quelconque des revendications précédentes, dans lequel le message de balayage est l'un des messages suivants : une réponse de sondage, une trame balise, une trame pilote de mesure.

14. Procédé selon l'une quelconque des revendications précédentes, dans lequel ladite surveillance comprend la surveillance de la transmission de messages de balayage dans le réseau sans fil, et dans lequel ladite détection de l'absence de message au cours de l'intervalle de temps de transmission minimal comprend la détection de l'absence de message de balayage au cours de l'intervalle de temps de transmission minimal.

15. Appareil comprenant :
un moyen pour surveiller la transmission de messages dans un réseau sans fil ;
un moyen pour déterminer qu'un débit de transmission de messages n'est pas suffisant si les conditions suivantes sont remplies : la détection de l'absence de message au cours d'un intervalle de temps de transmission minimal et la détermination du fait qu'un temps de transmission de balise cible suivant ne se situe pas dans un intervalle de temps prédéfini après l'expiration de l'intervalle de temps de transmission minimal ; et
un moyen permettant, lorsqu'il est déterminé que le débit de transmission de messages n'est pas suffisant, d'amener un point d'accès du réseau sans fil à transmette un message de balayage, dans lequel l'appareil est destiné soit au point d'accès, soit à un serveur (120) commandant le point d'accès.

16. Appareil selon la revendication 15, comprenant en outre un moyen pour configurer l'appareil afin de mettre en œuvre un procédé selon l'une quelconque des revendications 2 à 14 précédentes.

17. Produit de programme informatique mis en œuvre sur un support de distribution lisible par un ordinateur et comprenant des instructions de programme qui, lorsqu'elles sont chargées dans un appareil destiné à un point d'accès ou dans un appareil destiné à un serveur commandant le point d'accès, configurent l'appareil afin qu'il mette en œuvre un procédé selon l'une quelconque des revendications 1 à 14 précédentes.
